# EUROPÄISCHE PATENTSCHRIFT

(11) **EP 3 492 719 B1**
(45) Veröffentlichungstag und Bekanntmachung des Hinweises auf die Patenterteilung: **22.07.2020**
(21) Anmeldenummer: 18208441.8
(22) Anmeldetag: 27.11.2018
(51) Int. Cl.: F01N 13/00, F01N 13/18, F01N 13/16

(54) **GEHÄUSEANSCHLUSSELEMENT**
HOUSING CONNECTION ELEMENT
ÉLÉMENT DE RACCORDEMENT DE BOÎTIER

(30) Priorität: 01.12.2017 DE 102017128607
(43) Veröffentlichungstag der Anmeldung: 05.06.2019
(73) Patentinhaber: Eberspächer Exhaust Technology GmbH & Co. KG, 66539 Neunkirchen (DE)
(72) Erfinder: Scheer, Matthias, 66649 Oberthal (DE); Buckermann, Christoph, 73230 Kirchheim unter Teck (DE)
(74) Vertreter: Ruttensperger Lachnit Trossin Gomoll

(56) Entgegenhaltungen:
- DE-A1-102007 020 040
- JP-A- 2000 073 755
- US-A1- 2017 159 539

## Beschreibung

Die vorliegende Erfindung betrifft ein Gehäuseanschlusselement für ein Gehäuse einer Abgasbehandlungsbaugruppe einer Abgasanlage, insbesondere für eine Brennkraftmaschine.

In Abgasanlagen für Brennkraftmaschinen, beispielsweise für Fahrzeuge, eingesetzte Abgasbehandlungsbaugruppen, wie zum Beispiel Katalysatoranordnungen, umfassen im Allgemeinen ein Gehäuse mit einer rohrartigen, im Wesentlichen zylindrischen Umfangswandung, in welcher ein Abgasbehandlungselement, beispielsweise ein Katalysatorblock, aufgenommen ist. An den beiden axialen Endbereichen einer derartigen Umfangswandung sind Anschlusselemente vorgesehen, mit welchen eine jeweilige Abgasbehandlungsbaugruppe an weitere, im Allgemeinen rohrartige Abgasführungskomponenten angebunden werden kann.

Ein Gehäuseanschlusselement gemäß dem Oberbegriff des Anspruchs 1 ist aus der US 2017/0159539 A bekannt.

Es ist die Aufgabe der vorliegenden Erfindung, ein Gehäuseanschlusselement für ein Gehäuse einer Abgasbehandlungsbaugruppe einer Abgasanlage, insbesondere für eine Brennkraftmaschine, welches auch bei vergleichsweise komplexer Geometrie in einfacher Weise herstellbar ist, sowie ein Verfahren zu dessen Herstellung vorzusehen.

Gemäß einem ersten Aspekt wird diese Aufgabe gelöst durch ein Gehäuseanschlusselement für ein Gehäuse einer Abgasbehandlungsbaugruppe einer Abgasanlage, insbesondere für eine Brennkraftmaschine, gemäß Anspruch 1. Das Gehäuseanschlusselement umfasst:
ein erstes Gehäuseteil mit einem im Wesentlichen zylindrischen ersten Anschlussbereich zum Anschluss an eine Umfangswandung eines Gehäuses einer Abgasbehandlungsbaugruppe und einem an den ersten Anschlussbereich anschließenden Verjüngungsbereich,
ein an den Verjüngungsbereich angebundenes, ringartiges zweites Gehäuseteil mit einem zweiten Anschlussbereich zum Anschluss an eine Abgasführungskomponente einer Abgasanlage,
wenigstens eine Sensorbuchse in einem in dem Verjüngungsbereich ausgebildeten Buchsenaufnahmebereich des ersten Gehäuseteils.

Bei dem so aufgebauten Gehäuseanschlusselement können verschiedene Strukturelemente, welche einerseits der Aufnahme eines oder mehrerer Sensoren dienen, andererseits eine stabile Anbindung sowohl an das Gehäuse einer Abgasbehandlungsbaugruppe als auch an weitere abgasführende Komponenten gewährleisten, in einfacher Art und Weise bereitgestellt werden.

Besonders vorteilhaft ist dabei eine Ausgestaltung, bei welcher das erste Gehäuseteil als Blechumformteil ausgebildet ist, oder/und das zweite Gehäuseteil als Feingussteil ausgebildet ist. Somit kann einerseits das erste Gehäuseteil einfach mit vergleichsweise komplexer Geometrie bereitgestellt werden, während andererseits das zweite Gehäuseteil eine präzise und sehr feste Anbindung an weitere abgasführende Komponenten gewährleistet. Grundsätzlich kann auch bei Ausgestaltung des zweiten Gehäuseteils dieses Material abhebend nachbearbeitet werden. Auch die Ausgestaltung des zweiten Gehäuseteils durch Material abhebende Bearbeitung, beispielsweise zerspanende Bearbeitung eines aus einem dickwandigen Rohr oder einer Platine herausgetrennten Rings, ist möglich.

Erfindungsgemäß ist ferner vorgesehen, dass der Buchsenaufnahmebereich in einem nach innen verformten Einformungsbereich einen Buchsenaufnahmeflächenbereich mit wenigstens einer Buchsenaufnahmeöffnung, vorzugsweise zwei bezüglich einer Längsmittenachse in Umfangsrichtung aufeinanderfolgenden Buchsenaufnahmeöffnungen, umfasst, wobei in der wenigstens einen Buchsenaufnahmeöffnung eine Sensorbuchse angeordnet ist.

Insbesondere kann dabei der Einformungsbereich mit seinem Buchsenaufnahmeflächenbereich so geformt sein, dass für einen oder mehrere daran vorzusehende Sensoren eine gewünschte Raumlage gewährleistet werden kann.

Eine ausreichend starke Anstellung eines bzw. mehrerer Sensoren bezüglich des Abgasstroms wird dadurch erreicht, dass ein zwischen dem Buchsenaufnahmeflächenbereich und der Längsmittenachse gebildeter Winkel kleiner ist, als ein Winkel zwischen einem in Umfangsrichtung an den Buchsenaufnahmebereich anschließenden Bereich des Verjüngungsbereichs und der Längsmittenachse. Es wird darauf hingewiesen, dass jeweils die kleineren der beiden zwischen der jeweils betrachteten Fläche und der Längsmittenachse gebildeten Winkel miteinander verglichen werden.

Für eine stabile und einfach zu realisierende Anbindung des zweiten Gehäuseteils an das erste Gehäuseteil wird vorgeschlagen, dass in einem Endbereich des Verjüngungsbereichs ein bezüglich einer in dem Endbereich gebildeten Abgasdurchtrittsöffnung nach innen gerichteter Verbindungsflanschbereich vorgesehen ist, und dass das zweite Gehäuseteil in einem ringartigen Körperbereich mit dem Verbindungsflanschbereich verbunden ist.

Eine stabile Verbindung zwischen dem zweiten Gehäuseteil und einer daran anschließenden weiteren abgasführenden Komponente kann dadurch erreicht werden, dass der zweite Anschlussbereich einen von einem ringartigen Körperbereich des zweiten Gehäuseteils nach außen hervorstehenden Anschlussflansch umfasst.

Auch unter Berücksichtigung einer mit dem erfindungsgemäßen Aufbau realisierbaren, vergleichsweise komplexen Geometrie kann eine stabile und insbesondere abgasdichte Verbindung des ersten Gehäuseteils mit den damit zu verbindenden Komponenten in vorteilhafter Weise dadurch erreicht werden, dass das zweite Gehäuseteil mit dem ersten Gehäuseteil durch Laserschweißen verbunden ist, oder/und dass die wenigstens eine Sensorbuchse mit dem ersten Gehäuseteil durch Laserschweißen verbunden ist.

Die Erfindung betrifft ferner eine Abgasbehandlungsbaugruppe, insbesondere Katalysatoranordnung, umfassend eine rohrartige Umfangswandung und an einem Endbereich der Umfangswandung ein Gehäuseanschlusselement mit dem vorangehenden beschriebenen Aufbau.

Gemäß einem weiteren Aspekt wird die eingangs angegebene Aufgabe gelöst durch ein Verfahren zur Herstellung eines erfindungsgemäß aufgebauten Gehäuseanschlusselements, welches die folgenden Maßnahmen umfasst:
a) Bereitstellen des ersten Gehäuseteils als Blechumformteil mit einer Abgasdurchtrittsöffnung in einem Endbereich des Verjüngungsbereichs und dem nach innen verformten Einformungsbereich mit dem Buchsenaufnahmeflächenbereich mit wenigstens einer Buchsenaufnahmeöffnung im Buchsenaufnahmebereich,
b) Bereitstellen des zweiten Gehäuseteils,
c) Verbinden des zweiten Gehäuseteils mit dem ersten Gehäuseteil im Bereich der darin ausgebildeten Abgasdurchtrittsöffnung durch Laserschweißen,
d) Einsetzen einer Sensorbuchse in die wenigstens eine Buchsenaufnahmeöffnung und Verbinden der Sensorbuchse mit dem ersten Gehäuseteil durch Laserschweißen.

Dabei wird vorzugsweise bei der Maßnahme b) das zweite Gehäuseteil als Feingussteil bereitgestellt.

Eine einfach zu realisierende Vorgehensweise zur Bereitstellung des ersten Gehäuseteils auch mit vergleichsweise komplexer Geometrie kann vorhersehen, dass bei der Maßnahme a) das erste Gehäuseteil in einem Tiefzieh/LaserschneideVorgang bereitgestellt wird, wobei in einem Tiefziehvorgang aus einem plattenartigen Blechrohling ein Gehäuserohling mit dem im Wesentlichen zylindrischen ersten Anschlussbereich und dem Verjüngungsbereich mit einem Einformungsbereich für den Buchsenaufnahmebereich bereitgestellt wird und in einem daran anschließenden Laserschneidevorgang in dem Einformungsbereich die wenigstens eine Buchsenaufnahmeöffnung gebildet wird.

Für einen einfach durchzuführenden Herstellungsvorgang wird weiter vorgeschlagen, dass die Abgasdurchtrittsöffnung bei dem Tiefziehvorgang gebildet wird. Dazu kann ein entsprechend geformtes Tiefziehwerkzeug eingesetzt werden, welches nicht nur für eine entsprechende Verformung sorgt, sondern gleichzeitig auch ein Heraustrennen eines zum Bilden der Abgasdurchtrittsöffnung zu entfernenden Materialbereichs durchführt. Alternativ kann die Abgasdurchtrittöffnung bei dem Laserschneidevorgang gebildet werden.

Dabei kann vorzugsweise beim Bilden der Abgasdurchtrittsöffnung ein die Abgasdurchtrittsöffnung umgebender, nach innen gerichteter Verbindungsflanschbereich gebildet werden, und bei der Maßnahme c) kann ein ringartiger Körperbereich des zweiten Gehäuseteils mit dem Verbindungsflanschbereich verbunden werden.

Die vorliegende Erfindung wird nachfolgend mit Bezug auf die beiliegenden Figuren detailliert beschrieben. Es zeigt:

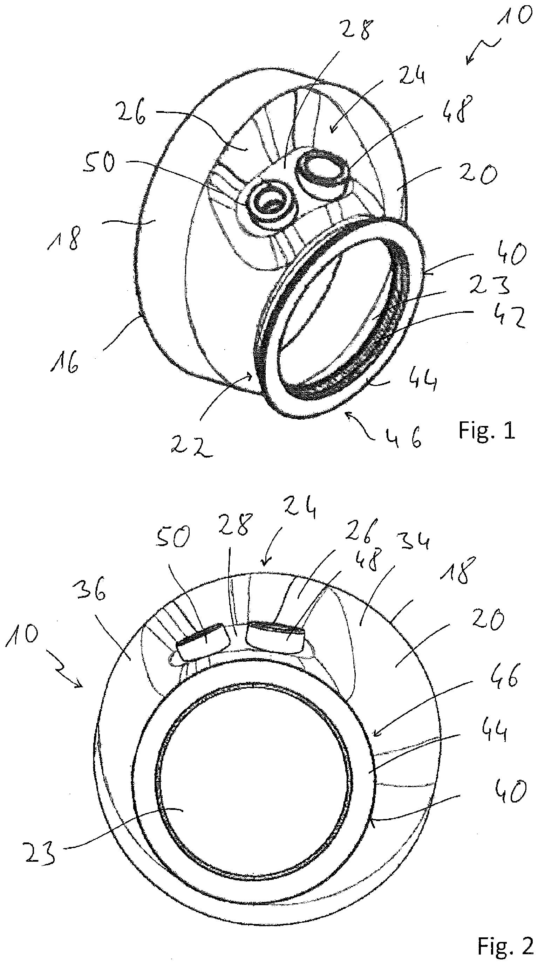

- Fig. 1: in perspektivischer Ansicht ein Gehäuseanschlusselement für eine Abgasbehandlungsbaugruppe;
- Fig. 2: das Gehäuseanschlusselement der Fig. 1 in anderer perspektivischer Ansicht;
- Fig. 3: eine Seitenansicht des Gehäuseanschlusselements;
- Fig. 4: eine Längsschnittansicht des Gehäuseanschlusselements, geschnitten längs einer Linie IV-IV in Fig. 3.

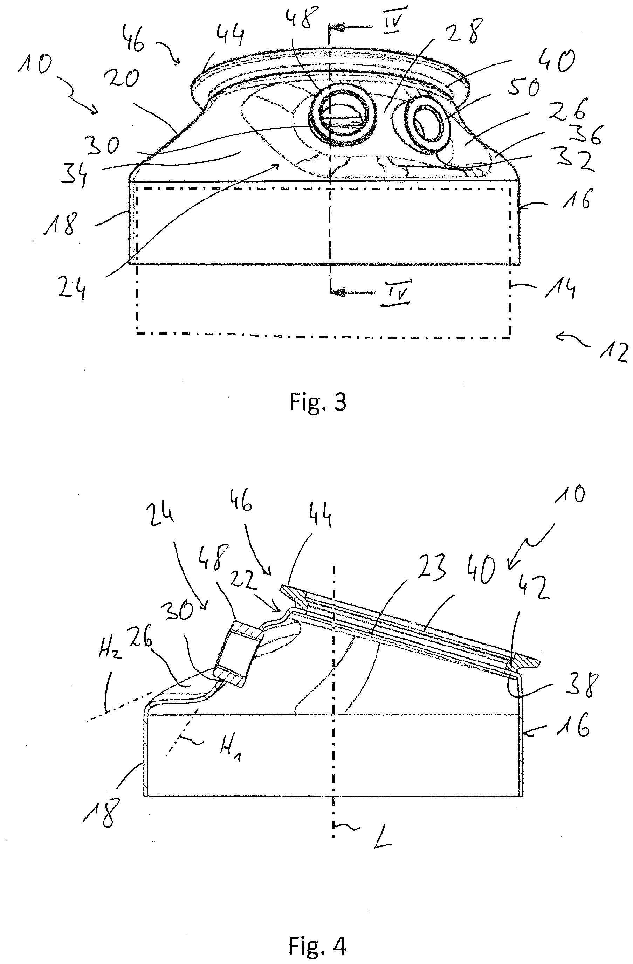

Die Figuren zeigen in verschiedenen perspektivischen Darstellungen bzw. in einer Schnittdarstellung ein allgemein mit 10 bezeichnetes Gehäuseanschlusselement für ein Gehäuse einer in Fig. 3 allgemein mit 12 bezeichneten Abgasbehandlungsbaugruppe, wie z. B. Katalysatoranordnung. Ein derartiges Gehäuse umfasst im Allgemeinen eine rohrartige bzw. im Wesentlichen zylindrische Umfangswandung 14, in welcher beispielsweise ein Katalysatorblock unter Zwischenlagerung einer Fasermatte oder dergleichen aufgenommen sein kann. Auf den in Fig. 3 dargestellten Endbereich dieser Umfangswandung 14 wird das erfindungsgemäß aufgebaute bzw. hergestellte Gehäuseanschlusselement 10 beispielsweise aufgeschoben und damit durch Verschweißung oder Verlötung fest verbunden.

Das Gehäuseanschlusselement 10 umfasst ein als Blechumformteil bereitgestelltes erstes Gehäuseteil 16. Das erste Gehäuseteil 16 wiederum ist ausgebildet mit einem im Wesentlichen zylindrischen ersten Anschlussbereich 18, in welchem das Gehäuseanschlusselement 16 anschließend an die Umfangswandung 14 des Gehäuses 12 positioniert werden kann. Der erste Anschlussbereich 18 ist mit einer Umfangsgeometrie bereitgestellt, welche im Wesentlichen der Umfangsgeometrie der Umfangswandung 14 entspricht, also beispielsweise mit kreisrunder Umfangsgeometrie.

Anschließend an den im Wesentlichen zylindrischen ersten Anschlussbereich 18 weist das erste Gehäuseteil 16 einen Verjüngungsbereich 20 auf. In diesem beispielsweise kegelstumpfartig ausgebildeten, zu einer Längsmittenachse L des ersten Anschlussbereichs 18 jedoch nicht notwendigerweise symmetrischen Verjüngungsbereich 20 nimmt die Querschnittsabmessung des ersten Gehäuseteils 16 ab. In einem Endbereich 22 des Verjüngungsbereichs 20, welcher vom ersten Anschlussbereich 18 abgewandt positioniert ist, ist im ersten Gehäuseteil 16 bzw. im Verjüngungsbereich 20 eine Abgasdurchtrittsöffnung 23 ausgebildet. Diese ist bei der in den Figuren dargestellten Ausgestaltung so positioniert, dass eine Öffnungsebene bzw. auch eine Längsmittenachse der Öffnung zur Längsmittenachse L des ersten Anschlussbereichs 18 angewinkelt liegen.

Im Verjüngungsbereich 20 des ersten Gehäuseteils 16 ist ein allgemein mit 24 bezeichneter Buchsenaufnahmebereich ausgebildet. Der Buchsenaufnahmebereich 24 ist im Wesentlichen durch eine zum Inneren des ersten Gehäuseteils 16 hin gerichtete Einformung 26 bereitgestellt, welche einen beispielsweise um die Längsmittenachse L gekrümmten Buchenaufnahmeflächenbereich 28 mit zwei in Umfangsrichtung um die Längsmittenachse L aufeinanderfolgenden Buchsenaufnahmeöffnungen 30, 42 aufweist. Durch das Bereitstellen des Buchsenaufnahmeflächenbereichs 28 im Einformungsbereich 26 wird erreicht, dass der Buchsenaufnahmeflächenbereich 28 bezüglich der Längsmittenachse L einen kleineren Winkel aufweist, als ein in Umfangsrichtung jeweils auf den Einformungsbereich 26 folgender Bereich 34 bzw. 36 des Verjüngungsbereichs 20. Dies ist in Fig. 3 durch die dem Buchsenaufnahmeflächenbereich 28 zugeordnete Hilfslinie H₁ sowie die den Bereichen 34 bzw. 36 zugeordneten Hilfslinie H₂ veranschaulicht.

Das vorangehend beschriebene erste Gehäusebauteil 16 wird durch Umformen, insbesondere Tiefziehen, eines plattenartigen Blechrohlings hergestellt. Bei dem unter Einsatz entsprechender Formen durchgeführten Umformungsvorgang kann in dem Endbereich 22 des Verjüngungsbereichs 20 die Abgasdurchtrittsöffnung 23 derart gebildet werden, dass im Endbereich 22 ein nach innen, also zur Abgasdurchtrittsöffnung 23 hin vorstehender Verbindungsflanschbereich 38 gebildet wird. Hierbei wird durch die im Tiefziehvorgang eingesetzten Formen der zum Bereitstellen der Abgasdurchtrittsöffnung 23 zu entfernende Materialbereich herausgetrennt. Ferner werden im Buchsenaufnahmeflächenbereich 28 die beiden Buchsenaufnahmeöffnungen 30, 32 in einem Laserschneidevorgang durch Heraustrennen der entsprechenden Materialbereiche aus dem durch Umformen eines plattenartigen Blechrohlings gebildeten Rohling für das erste Gehäuseteil 16 gebildet. Es ist darauf hinzuweisen, dass alternativ auch die Abgasdurchtrittsöffnung 23 in einem derartigen Laserschneidevorgang durch Herausschneiden des entsprechenden Materialbereichs aus dem Rohling für das erste Gehäuseteil 16 gebildet werden kann.

Nachdem in der vorangehend beschriebenen Art und Weise das erste Gehäuseteil 16 in einem Tiefzieh/Laserschneide-Vorgang bereitgestellt worden ist, wird im Endbereich 22 ein allgemein mit 40 bezeichnetes zweites Gehäuseteil am ersten Gehäuseteil 16 festgelegt. Das zweite Gehäuseteil 40 ist mit einem ringartigen Körperbereich 42 ausgebildet, welcher stumpf an den Verbindungsflanschbereich 38 angesetzt und mit diesem durch Laserschweißen verbunden wird. Bei diesem Laserschweißvorgang kann vorteilhafter Weise der gleiche Laser eingesetzt werden, der auch in dem vorangehend geschilderten Laserschneidevorgang zum Bilden der Buchsenaufnahmeöffnungen 30, 32, gegebenenfalls auch zum Bilden der Abgasdurchtrittsöffnung 23, eingesetzt wurde. Von dem ringartigen Körperbereich 22 steht ein diesen ringartig umgebender Anschlussflansch 44 nach radial außen bezüglich der Abgasdurchtrittsöffnung 23 hervor, wobei auf diese Art und Weise ein zweiter Anschlussbereich 46 des Gehäuseanschlusselements 10 bereitgestellt ist.

Das zweite Gehäuseteil 40 ist als Feingussbauteil mit hoher Formgenauigkeit bereitgestellt und ermöglicht den Anschluss des Gehäuseanschlusselements an weitere, beispielsweise rohrartige abgasführende Bauteile an einer Abgasanlage, beispielsweise den Auslasskrümmer einer Brennkraftmaschine oder einen Abgasturbolader. Dazu kann eine den Anschlussflansch 44 und einen entsprechenden Flansch einer damit zu verbindenden abgasführenden Komponente umgebende Rohrschelle oder dergleichen eingesetzt werden.

In die im Buchsenaufnahmebereich 24 gebildeten Buchsenaufnahmeöffnungen 30, 32 werden Sensorbuchsen 48, 50 eingesetzt. Dabei können zum Erreichen einer gewünschten Raumlage der in diese Sensorbuchsen 48, 50 beispielsweise durch Verschraubung einzubringenden Sensoren Längsmittenachsen dieser Sensorbuchsen 48, 50 so positioniert werden, dass sie bezüglich des Buchsenaufnahmeflächenbereichs 28 eine von 90° abweichende Winkellage einnehmen. Durch die in Fig. 4 erkennbare Anstellung des Buchsenaufnahmeflächenbereichs 28 bezüglich der Längsmittenachse L und die ebenfalls in Fig. 4 erkennbare Anstellung der Sensoraufnahmebuchsen 48, 50 bezüglich des Buchsenaufnahmeflächenbereichs kann, obgleich in diesen Sensoraufnahmebuchsen 48, 50 angeordnete Sensoren grundsätzlich im Verjüngungsbereich 20 positioniert sind, eine derartige Ausrichtung der in das Innere des Gehäuseanschlusselements 10 eingreifenden Sensoren erreicht werden, dass diese bezüglich des durch die Abgasdurchtrittsöffnung 24 hindurchtretenden Abgasstroms und einer Hauptströmungsrichtung desselben näherungsweise einen Winkel von 90° aufweisen.

Auch die Sensoraufnahmebuchsen 48, 50 werden mit dem ersten Gehäuseteil 16 durch Laserschweißen verbunden. Ebenso wie bei der Verbindung des zweiten Gehäuseteils 40 mit dem ersten Gehäuseteil 16 wird auch hier vorzugsweise eine unterbrechungsfrei umlaufende Schweißnaht gebildet, so dass eine gasdichte Anbindung der Sensoraufnahmebuchsen 48, 50 und des zweiten Gehäuseteils 40 an das erste Gehäuseteil 16 erreicht wird.

Mit dem erfindungsgemäßen Aufbau, bei welchem das erste Gehäuseteil 16 mit seinen Bestandteilen erster Anschlussbereich 18, Verjüngungsbereich 20 und Buchsenaufnahmebereich 24 als ein integrales, also einstückiges Bauteil durch Umformen eines Blechrohlings erhalten wird, wird es möglich, dieses erste Gehäuseteil 16 in einfacher Weise mit vergleichsweise komplexer Geometrie bereitzustellen. All diejenigen Bestandteile des Gehäuseanschlusselements 10, welche eine noch höhere Fertigungspräzision oder/und Festigkeit erfordern, also insbesondere das zweite Gehäuseteil 40 und die Sensorbuchsen 48, 50, werden als separate Bauteile mit dem ersten Gehäuseteil 16 durch Laserschweißen verbunden und mit für diese Bauteile jeweils geeigneten Fertigungsprozessen bereitgestellt. Dabei wird die bei dem Gehäuseanschlusselement 10 erreichte hohe Maßgenauigkeit auch durch den zum Verbinden der verschiedenen Bauteile eingesetzten Laserschweißprozess unterstützt.

Es sei abschließend darauf hingewiesen, dass selbstverständlich unter Beibehalt der Prinzipien der vorliegenden Erfindung das in den Figuren dargestellte Gehäuseanschlusselement in verschiedenster Weise variiert werden kann. So könnte selbstverständlich der im Wesentlichen zylindrische erste Anschlussbereich mit kürzerer axialer Abmessung oder auch stufenartig oder konisch sich erweiternd oder im Durchmesser sich verringernd ausgebildet sein. Auch könnte im Endbereich 22 an den Verjüngungsbereich ein im Wesentlichen die Abgasdurchtrittsöffnung 23 bereitstellender zylindrischer Abschnitt anschließen, an welchen dann das zweite Gehäuseteil 40 anzubinden ist und welcher im Sinne der vorliegenden Erfindung im Wesentlichen den Endbereich 22 des Verjüngungsbereichs 20 bereitstellend betrachtet werden kann. Auch können anstelle der beiden dargestellten Sensoraufnahmebuchsen, welche beispielsweise einen Temperatursensor und eine Lambdasonde aufnehmen können, mehr oder weniger Sensoraufnahmebuchsen in einer entsprechend angepassten Anzahl an Buchsenaufnahmeöffnungen im Aufnahmeflächenbereich 28 vorgesehen sein. Selbstverständlich könnten über den Umfang verteilt mehrere Einformungsbereiche zum Bereitstellen eines Buchsenaufnahmebereichs vorgesehen sein, so dass die Sensorbuchsen und somit die darin aufgenommenen Sensoren in verschiedenen Umfangsbereichen positioniert werden können. Der Verjüngungsbereich könnte grundsätzlich auch symmetrisch gestaltet sein, so dass beispielsweise die im Endbereich 22 desselben gebildete Abgasdurchtrittsöffnung 23 zur Längsmittenachse L zentrisch und mit einer zu dieser orthogonalen Öffnungsebene angeordnet sein kann.

## Patentansprüche

1. Gehäuseanschlusselement für ein Gehäuse einer Abgasbehandlungsbaugruppe einer Abgasanlage, insbesondere für eine Brennkraftmaschine, umfassend:
ein erstes Gehäuseteil (16) mit einem im Wesentlichen zylindrischen ersten Anschlussbereich (18) zum Anschluss an eine Umfangswandung (14) eines Gehäuses (12) einer Abgasbehandlungsbaugruppe und einem an den ersten Anschlussbereich (18) anschließenden Verjüngungsbereich (20),
ein an den Verjüngungsbereich (20) angebundenes, ringartiges zweites Gehäuseteil (40) mit einem zweiten Anschlussbereich (46) zum Anschluss an eine Abgasführungskomponente einer Abgasanlage,
wenigstens eine Sensorbuchse (48, 50) in einem in dem Verjüngungsbereich (20) ausgebildeten Buchsenaufnahmebereich (24) des ersten Gehäuseteils (16),
wobei der Buchsenaufnahmebereich (24) in einem nach innen verformten Einformungsbereich (26) einen Buchsenaufnahmeflächenbereich (28) mit wenigstens einer Buchsenaufnahmeöffnung (30, 32) und eine in der wenigstens einen Buchsenaufnahmeöffnung (30, 32) aufgenommene Sensorbuchse (48, 50) umfasst,
**dadurch gekennzeichnet, dass** ein zwischen dem Buchsenaufnahmeflächenbereich (28) und einer Längsmittenachse (L) des ersten Anschlussbereichs (18) gebildeter Winkel kleiner ist, als ein Winkel zwischen einem in Umfangsrichtung an den Buchsenaufnahmebereich (24) anschließenden Bereich (34, 36) des Verjüngungsbereichs (20) und der Längsmittenachse (L) des ersten Anschlussbereichs (18).

2. Gehäuseanschlusselement nach Anspruch 1, **dadurch gekennzeichnet, dass** das erste Gehäuseteil (16) als Blechumformteil ausgebildet ist, oder/und dass das zweite Gehäuseteil (40) als Feingussteil oder/und als Material abhebend, insbesondere zerspanend, bearbeitetes Teil ausgebildet ist.

3. Gehäuseanschlusselement nach Anspruch 1 oder 2, **dadurch gekennzeichnet, dass** der Buchsenaufnahmebereich (24) in dem Buchsenaufnahmeflächenbereich (28) zwei bezüglich der Längsmittenachse (L) des ersten Anschlussbereichs (18) in Umfangsrichtung aufeinanderfolgende Buchsenaufnahmeöffnungen (30, 32) und in jeder Buchsenaufnahmeöffnung (30, 32) eine darin aufgenommene Sensorbuchse (48, 50) umfasst.

4. Gehäuseanschlusselement nach einem der vorangehenden Ansprüche, **dadurch gekennzeichnet, dass** in einem Endbereich (22) des Verjüngungsbereichs (20) ein bezüglich einer in dem Endbereich (22) gebildeten Abgasdurchtrittsöffnung (23) nach innen gerichteter Verbindungsflanschbereich (38) vorgesehen ist, und dass das zweite Gehäuseteil (40) in einem ringartigen Körperbereich (42) mit dem Verbindungsflanschbereich (38) verbunden ist.

5. Gehäuseanschlusselement nach einem der vorangehenden Ansprüche, **dadurch gekennzeichnet, dass** der zweite Anschlussbereich (46) einen von einem ringartigen Körperbereich (42) des zweiten Gehäuseteils (40) nach außen hervorstehenden Anschlussflansch (44) umfasst.

6. Gehäuseanschlusselement nach einem der vorangehenden Ansprüche, **dadurch gekennzeichnet, dass** das zweite Gehäuseteil (40) mit dem ersten Gehäuseteil (16) durch Laserschweißen verbunden ist, oder/und dass die wenigstens eine Sensorbuchse (48, 50) mit dem ersten Gehäuseteil (16) durch Laserschweißen verbunden ist.

7. Abgasbehandlungsbaugruppe, insbesondere Katalysator, umfassend eine rohrartige Umfangswandung (14) und an einem Endbereich der Umfangswandung (14) ein Gehäuseanschlusselement (10) nach einem der vorangehenden Ansprüche.

8. Verfahren zur Herstellung eines Gehäuseanschlusselements nach einem der Ansprüche 1-6, **gekennzeichnet durch** die Maßnahmen:
a) Bereitstellen des ersten Gehäuseteils (16) als Blechumformteil mit einer Abgasdurchtrittsöffnung (23) in einem Endbereich (22) des Verjüngungsbereichs (20) und dem nach innen verformten Einformungsbereich (26) mit dem Buchsenaufnahmeflächenbereich (28) mit wenigstens einer Buchsenaufnahmeöffnung (30, 32) im Buchsenaufnahmebereich (24),
b) Bereitstellen des zweiten Gehäuseteils (40),
c) Verbinden des zweiten Gehäuseteils (40) mit dem ersten Gehäuseteil im Bereich der darin ausgebildeten Abgasdurchtrittsöffnung (23) **durch** Laserschweißen,
d) Einsetzen einer Sensorbuchse (48, 50) in die wenigstens eine Buchsenaufnahmeöffnung (30, 32) und Verbinden der Sensorbuchse (48, 50) mit dem ersten Gehäuseteil (16) **durch** Laserschweißen.

9. Verfahren nach Anspruch 8, **dadurch gekennzeichnet, dass** bei der Maßnahme b) das zweite Gehäuseteil (40) als Feingussteil bereitgestellt wird.

10. Verfahren nach Anspruch 8 oder 9, **dadurch gekennzeichnet, dass** bei der Maßnahme a) das erste Gehäuseteil (16) in einem Tiefzieh/LaserschneideVorgang bereitgestellt wird, wobei in einem Tiefziehvorgang aus einem plattenartigen Blechrohling ein Gehäuserohling mit dem im Wesentlichen zylindrischen ersten Anschlussbereich (18) und dem Verjüngungsbereich (20) mit dem Einformungsbereich (26) für den Buchsenaufnahmebereich (24) bereitgestellt wird und in einem daran anschließenden Laserschneidevorgang in dem Einformungsbereich (26) die wenigstens eine Buchsenaufnahmeöffnung (30, 32) gebildet wird.

11. Verfahren nach Anspruch 10, **dadurch gekennzeichnet, dass** die Abgasdurchtrittsöffnung (23) bei dem Tiefziehvorgang oder dem Laserschneidevorgang gebildet wird.

12. Verfahren nach Anspruch 11, **dadurch gekennzeichnet, dass** beim Bilden der Abgasdurchtrittsöffnung ein die Abgasdurchtrittsöffnung (23) umgebender, nach innen gerichteter Verbindungsflanschbereich (38) gebildet wird, und dass bei der Maßnahme c) ein ringartiger Körperbereich (42) des zweiten Gehäuseteils (40) mit dem Verbindungsflanschbereich (38) verbunden wird.

## Claims

1. Housing connection element for a housing of an exhaust gas treatment assembly unit of an exhaust system, especially for an internal combustion engine, comprising:
a first housing part (16) with an essentially cylindrical first connection area (18) for connection to a circumferential wall (14) of a housing (12) of an exhaust gas treatment assembly unit and with a tapered area (20) adjacent to the first connection area (18),
an annular, second housing part (40), which is connected to the tapered area (20), with a second connection area (46) for connection to an exhaust gas-carrying component of an exhaust system,
at least one sensor sleeve (48, 50) in a sleeve receiving area (24) of the first housing part (16), which is formed in the tapered area (20),
wherein the sleeve receiving area (24) comprises a sleeve receiving surface area (28) in a recessed area (26) that is deformed inwards with at least one sleeve receiving opening (30, 32), and a sensor sleeve (48, 50) received in the at least one sleeve receiving opening (30, 32),
**characterized in that** an angle formed between the sleeve receiving surface area (28) and a longitudinal central axis (L) of the first connection area (18) is smaller than an angle between an area (34, 36) of the tapered area (20) adjacent to the sleeve receiving area (24) in the circumferential direction, and the longitudinal central axis (L) of the first connection area (18).

2. Housing connection element in accordance with claim 1, **characterized in that** the first housing part (16) is configured as a shaped sheet metal part, or/and that the second housing part (40) is configured as a precision casting or/and as a part that is machined by removing material, especially removing metal by cutting.

3. Housing connection element in accordance with claim 1 or 2, **characterized in that** the sleeve receiving area (24) comprises in the sleeve receiving surface area (28) two sleeve receiving openings (30, 32) following one another in the circumferential direction in relation to the longitudinal central axis (L), and a sensor sleeve (48, 50) received in each sleeve receiving opening (30, 32).

4. Housing connection element in accordance with one of the above claims, **characterized in that** a connection flange area (38), which is directed inwardly in relation to an exhaust gas passage opening (23) formed in the end area (22), is provided in an end area (22) of the tapered area (20), and that the second housing part (40) is connected to the connection flange area (38) in an annular body area (42).

5. Housing connection element in accordance with one of the above claims, **characterized in that** the second connection area (46) comprises a connection flange (44) protruding in the outward direction from an annular body area (42) of the second housing part (40).

6. Housing connection element in accordance with one of the above claims, **characterized in that** the second housing part (40) is connected to the first housing part (16) by laser welding, or/and that the at least one sensor sleeve (48, 50) is connected to the first housing part (16) by laser welding.

7. Exhaust gas treatment assembly unit, especially catalytic converter, comprising a tubular circumferential wall (14) and a housing connection element (10) in accordance with one of the above claims at an end area of the circumferential wall (14).

8. Process for the manufacture of a housing connection element in accordance with one of claims 1-6, **characterized by** the steps:
a) Provision of the first housing part (16) as a shaped sheet metal part with an exhaust gas passage opening (23) in an end area (22) of the tapered area (20) and the recess area (26) deformed inwards with said sleeve receiving surface area (28) with at least one sleeve receiving opening (30, 32) in the sleeve receiving area (24),
b) provision of the second housing part (40),
c) connection of the second housing part (40) to the first housing part in the area of the exhaust gas passage opening (23) formed therein by laser welding,
d) insertion of a sensor sleeve (48, 50) into the at least one sleeve receiving opening (30, 32) and connection of the sensor sleeve (48, 50) to the first housing part (16) by laser welding.

9. Process in accordance with claim 8, **characterized in that** the second housing part (40) is provided as a precision casting in step b).

10. Process in accordance with claim 8 or 9, **characterized in that** the first housing part (16) is provided in step a) in a deep-drawing/laser-cutting operation, wherein a housing blank is formed in a deep-drawing operation from a plate-like sheet metal blank with the essentially cylindrical first connection area (18) and with the tapered area (20) with a recessed area (26) for the sleeve receiving area (24) and the at least one sleeve receiving opening (30, 32) is formed in the recessed area (26) in a subsequent laser-cutting operation.

11. Process in accordance with claim 10, **characterized in that** the exhaust gas passage opening (23) is formed in the deep-drawing operation or in the laser-cutting operation.

12. Process in accordance with claim 11, **characterized in that** a connection flange area (38) surrounding the exhaust gas passage opening (23) and directed inwards is formed during the formation of the exhaust gas passage opening, and that an annular body area (42) of the second housing part (40) is connected to the connection flange area (38) in step c).

## Revendications

1. Élément de raccordement de boîtier pour un boîtier d'un module de traitement des gaz d'échappement d'un système d'échappement, en particulier pour un moteur à combustion interne, comprenant :
une première partie de boîtier (16) avec une première zone de raccordement (18) essentiellement cylindrique pour le raccordement à une paroi circonférentielle (14) d'un boîtier (12) d'une unité de montage pour le traitement des gaz d'échappement et avec une zone rétrécie (20) adjacente à la première zone de raccordement (18),
une deuxième partie de boîtier annulaire (40), qui est reliée à la zone rétrécie (20), avec une deuxième zone de raccordement (46) pour le raccordement à un composant d'un système d'échappement transportant des gaz d'échappement,
au moins un manchon de capteur (48, 50) dans une zone de réception de manchon (24) de la première partie de boîtier (16), qui est formée dans la zone rétrécie (20),
dans lequel la zone de réception de manchon (24) comprend une zone de surface de réception de manchon (28) dans une zone évidée (26) qui est déformée vers l'intérieur avec au moins une ouverture de réception de manchon (30, 32), et un manchon de capteur (48, 50) reçu dans ladite au moins une ouverture de réception de manchon (30, 32),
**caractérisé en ce qu'**un angle formé entre la zone de surface de réception de manchon (28) et un axe central longitudinal (L) de la première zone de raccordement (18) est plus petit qu'un angle entre une zone (34, 36) de la zone rétrécie (20) adjacente à la zone de réception de manchon (24) dans la direction circonférentielle, et l'axe central longitudinal (L) de la première zone de raccordement (18).

2. Elément de raccordement de boîtier selon la revendication 1, **caractérisé en ce que** la première partie de boîtier (16) est configurée comme une pièce de tôle façonnée, et/ou **en ce que** la deuxième partie de boîtier (40) est configurée comme une pièce moulée de précision, et/ou comme une pièce qui est usinée par enlèvement de matière, en particulier par enlèvement de métal par découpe.

3. Elément de raccordement de boîtier selon la revendication 1 ou 2, **caractérisé en ce que** la zone de réception de manchon (24) comprend dans la zone de surface de réception de manchon (28) deux ouvertures de réception de manchon (30, 32) se succédant dans la direction circonférentielle par rapport à l'axe central longitudinal (L), et un manchon de capteur (48, 50) reçu dans chaque ouverture de réception de manchon (30, 32).

4. Elément de raccordement de boîtier selon l'une des revendications précédentes, **caractérisé en ce qu'**une zone de bride de raccordement (38), qui est dirigée vers l'intérieur par rapport à une ouverture de passage des gaz d'échappement (23) formée dans la zone d'extrémité (22), est prévue dans une zone d'extrémité (22) de la zone rétrécie (20), et **en ce que** la deuxième partie de boîtier (40) est reliée à la zone de bride de raccordement (38) dans une zone de corps annulaire (42).

5. Elément de raccordement de boîtier selon l'une des revendications ci-dessus, **caractérisés en ce que** la deuxième zone de raccordement (46) comprend une bride de raccordement (44) faisant saillie vers l'extérieur d'une zone de corps annulaire (42) de la deuxième partie de boîtier (40).

6. Elément de raccordement de boîtier selon l'une des revendications ci-dessus, **caractérisé en ce que** la deuxième partie de boîtier (40) est reliée à la première partie de boîtier (16) par soudage au laser, et/ou **en ce que** ladite au moins une douille de capteur (48, 50) est reliée à la première partie de boîtier (16) par soudage au laser.

7. Module de traitement des gaz d'échappement, en particulier catalyseur, comprenant une paroi circonférentielle tubulaire (14) et un élément de raccordement au boîtier (10) selon l'une des revendications ci-dessus dans une zone d'extrémité de la paroi circonférentielle (14).

8. Procédé de fabrication d'un élément de raccordement de boîtier selon l'une des revendications 1 à 6, **caractérisé par** les étapes suivantes :
a) mise à disposition de la première partie de boîtier (16) sous forme de pièce de tôle façonnée avec une ouverture de passage des gaz d'échappement (23) dans une zone d'extrémité (22) de la zone rétrécie (20) et la zone évidée (26) déformée vers l'intérieur avec la zone de surface de réception de manchon (28) avec au moins une ouverture de réception de manchon (30, 32) dans la zone de réception de manchon (24),
b) mise à disposition de la deuxième partie de boîtier (40),
c) raccordement de la deuxième partie de boîtier (40) à la première partie de boîtier dans la zone de l'ouverture de passage des gaz d'échappement (23) qui y est formée, par soudage au laser,
d) insertion d'un manchon de capteur (48, 50) dans ladite au moins une ouverture de réception de manchon (30, 32), et raccordement du manchon de capteur (48, 50) à la première partie de boîtier (16) par soudage au laser.

9. Procédé selon la revendication 8, **caractérisé en ce que** la deuxième partie de boîtier (40) est prévue comme pièce moulée de précision dans l'étape b).

10. Procédé selon la revendication 8 ou 9, **caractérisé en ce que** la première partie de boîtier (16) est prévue à l'étape a) dans une opération d'emboutissage/de découpage au laser, dans lequel une ébauche de boîtier est formée dans une opération d'emboutissage profond à partir d'une ébauche de tôle en forme de plaque avec la première zone de raccordement (18) essentiellement cylindrique et avec la zone rétrécie (20) avec une zone évidée (26) pour la zone de réception de manchon (24) et ladite au moins une ouverture de réception de manchon (30, 32) est formée dans la zone évidée (26) dans une opération de découpage au laser ultérieure.

11. Procédé selon la revendication 10, **caractérisé en ce que** l'ouverture de passage des gaz d'échappement (23) est formée lors de l'opération d'emboutissage profond ou lors de l'opération de découpe au laser.

12. Procédé selon la revendication 11, **caractérisé en ce qu'**une zone de bride de raccordement (38) entourant l'ouverture de passage des gaz d'échappement (23) et dirigée vers l'intérieur est formée lors de la formation de l'ouverture de passage des gaz d'échappement, et en ce q u'une zone de corps annulaire (42) de la deuxième partie de boîtier (40) est reliée à la zone de bride de raccordement (38) à l'étape c).
